# EUROPÄISCHE PATENTANMELDUNG

(11) **EP 1 225 385 A2**
(43) Veröffentlichungstag der Anmeldung: **24.07.2002**
(21) Anmeldenummer: 02000636.7
(22) Anmeldetag: 11.01.2002
(51) Int. Cl.: F21S 8/10, F21V 8/00, B60Q 1/30

(54) **Leuchte, insbesondere Signalleuchte, für Kraftfahrzeuge**

(30) Priorität: 18.01.2001 DE 20100918 U
(71) Anmelder: Reitter & Schefenacker GmbH & Co. KG, 73730 Esslingen (DE)
(72) Erfinder: Müller, Otto Rolf, 73347 Mühlhausen (DE); Berlitz, Stephan, 86529 Schrobenhausen (DE); Schmitt, Friedbert, 73730 Esslingen (DE)
(74) Vertreter: Kohl, Karl-Heinz

(57) **Zusammenfassung**

Die Leuchte eignet sich als Heckleuchte für Kraftfahrzeuge. Sie hat ein Leuchtengehäuse (2), dessen Gehäuseöffnung (3) mit einer Lichtscheibe (4) verschlossen ist. Im Gehäuse (2) sind ein Reflektor (5) und eine Lichtquelle (8) angeordnet. Damit die Leuchte (8) eine lange Einsatzdauer hat und kostengünstig hergestellt werden kann, ist sie als LED ausgebildet, die verdeckt im Gehäuse (2) angeordnet ist. Die Strahlen (10) der Lichtquelle (8) werden vom Reflektor (5) zu einem Lichtleiter (9) reflektiert, der im Bereich zwischen dem Reflektor (5) und der Lichtscheibe (4) liegt. Der Lichtleiter (9) vermittelt den Eindruck, daß in der Leuchte (8) eine Fluoreszenzröhre angeordnet ist. Die Leuchte (1) kann für alle Arten von Signalleuchten, auch für Blinkleuchten, die im vorderen Bereich des Kraftfahrzeuges vorgesehen sind, verwendet werden.

## Beschreibung

Die Erfindung betrifft eine Leuchte, insbesondere eine Signalleuchte, für Kraftfahrzeuge nach dem Oberbegriff des Anspruches 1.

Es sind Heckleuchten von Kraftfahrzeugen bekannt, bei denen im Leuchtengehäuse als Leuchtmittel eine Fluoreszenzröhre vorgesehen ist. Sie ist teuer und hat eine relativ kurze Lebensdauer.

Der Erfindung liegt die Aufgabe zugrunde, eine Leuchte dieser Art so auszubilden, daß sie bei langer Einsatzdauer kostengünstig hergestellt werden kann.

Diese Aufgabe wird bei einer Leuchte der gattungsbildenden Art erfindungsgemäß mit den kennzeichnenden Merkmalen des Anspruches 1 gelöst.

Bei der erfindungsgemäßen Leuchte ist das Leuchtmittel durch mindestens eine LED gebildet, die eine lange Lebensdauer hat und kostengünstig hergestellt werden kann. Der Lichtleiter erweckt den Eindruck, daß in der Leuchte eine Fluoreszenzröhre angeordnet ist. Der Lichtleiter ist jedoch wesentlich kostengünstiger als eine Fluoreszenzröhre. Die erfindungsgemäße Leuchte kann für alle Arten von Signalleuchten, beispielsweise auch für Blinkleuchten, die im vorderen Bereich des Kraftfahrzeuges vorgesehen sind, verwendet werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigen:
- Fig. 1: einen Teil einer erfindungsgemäßen Leuchte eines Kraftfahrzeuges im Vertikalschnitt,
- Fig. 2: eine Ansicht der Heckleuchte ohne Lichtscheibe.

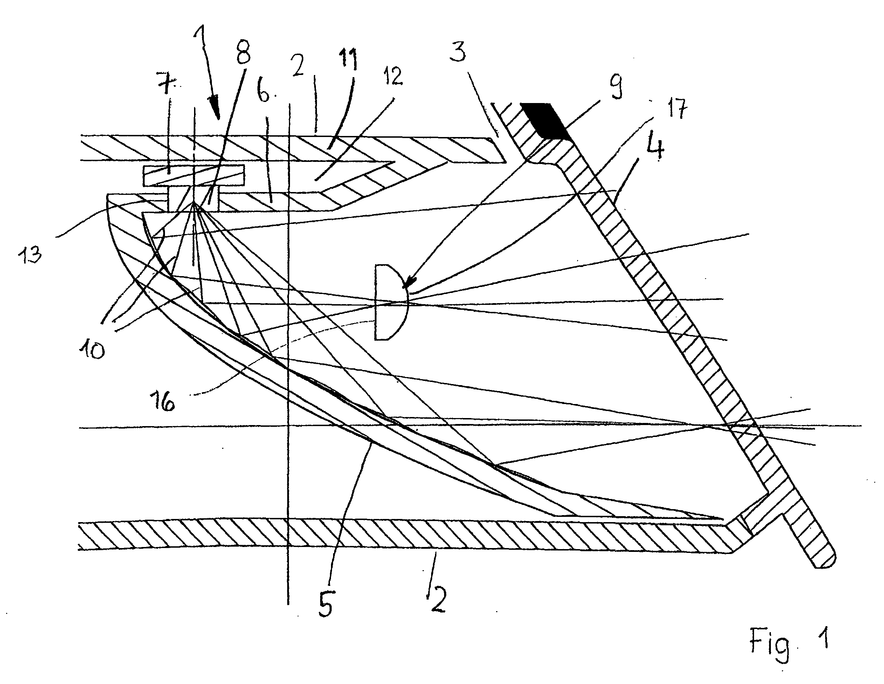

Die in den Zeichnungen dargestellte Heckleuchte 1 weist ein Gehäuse 2 auf, von dem in Fig. 1 nur ein Teil dargestellt ist. Die Gehäuseöffnung 3 ist in bekannter Weise mit einer Lichtscheibe 4 verschlossen. Mit Abstand hinter der Lichtscheibe 4 ist ein Reflektor 5 vorgesehen, der im Ausführungsbeispiel einstückig mit dem Gehäuse 2 ausgebildet ist, aber auch ein gesondertes Bauteil sein kann. Hinter einer an den Reflektor 5 anschließenden Gehäusewand 6 ist eine Platine 7 angeordnet, auf der vorzugsweise mehrere in Reihe hintereinander angeordnete LEDs 8 befestigt sind. In Fig. 1 ist nur eine LED 8 dargestellt.

Vorzugsweise sind die LEDs 8 SMD (surface mounted device)-LEDs. Die an den Reflektor 5 anschließende Gehäusewand 6 wird mit Abstand von einer Außenwand 11 des Gehäuses 1 umgeben. Dadurch wird zwischen den beiden Gehäusewänden 6, 11 ein Aufnahmeraum 12 für die Platine 7 gebildet. Sie ist dadurch von außen nicht mehr sichtbar. Die LEDs 8 liegen in Öffnungen 13 in der Gehäusewand 6 und stehen vorzugsweise nicht über die Gehäusewand 6 in Richtung auf den Reflektor 5 vor. Das von den LEDs 8 ausgesandte Licht wird am Reflektor 5 in Richtung auf die Lichtscheibe 4 reflektiert, wie die Strahlen in Fig. 1 zeigen. Aufgrund ihrer verdeckten Anordnung sind die LEDs 8 von außen durch die Lichtscheibe 4 nicht sichtbar.

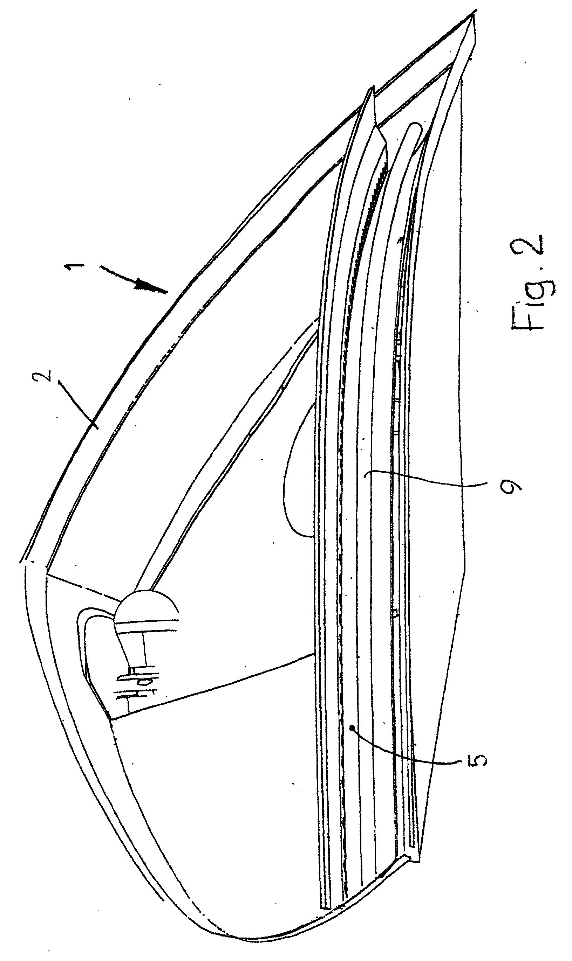

Im Bereich zwischen dem Reflektor 5 und der Lichtscheibe 4 befindet sich ein Lichtleiter 9, der im Ausführungsbeispiel kleineren Abstand vom Reflektor 5 als von der Lichtscheibe 4 hat. Er kann aber auch gleichen Abstand vom Reflektor 5 und der Lichtscheibe 4 oder größeren Abstand vom Reflektor 5 und der Lichtscheibe 4 haben. Der Lichtleiter 9 ist stabförmig ausgebildet und besteht aus PMMA. Er erstreckt sich vorteilhaft im wesentlichen über die ganze Länge des Reflektors 5. Wie Fig. 2 zeigt, ist der Lichtleiter 9 über seine Länge gekrümmt ausgebildet. Selbstverständlich kann der Lichtleiter 9 je nach Ausbildung der Leuchte 1 jede andere Form aufweisen. Er ist an beiden Enden in geeigneter Weise gehalten.

Die dem Reflektor 5 zugewandte Rückseite 16 des Lichtleiters 9 ist im Querschnitt gerade ausgebildet (Fig. 1), kann selbstverständlich im Querschnitt auch gekrümmt sein. Die der Lichtscheibe 4 zugewandte Seite 17 des Lichtleiters 9 ist konvex gekrümmt. Der Lichtleiter 9 hat nur eine solche Breite, daß ein Teil der von den LEDs 8 ausgesandten Lichtstrahlen 9 nach der Reflexion am Reflektor 5 am Lichtleiter 9 vorbei direkt zur Lichtscheibe 4 gelangt.

Ein anderer Teil der Lichtstrahlen 10, die von den LEDs 8 ausgehen und am Reflektor 5 reflektiert werden, gelangen auf der Rückseite 16 des Lichtleiters 9, durch den die Lichtstrahlen hindurchtreten und auf die Lichtscheibe 4 gelangen. Da der Lichtleiter 9 stabförmig ausgebildet ist und die Strahlen beim Durchgang durch den Lichtleiter einen anderen Farbton erhalten, entsteht ein band- bzw. stabförmiger Lichtbereich für den die Leuchte 1 von außen sehenden Betrachter. Für ihn entsteht der Eindruck, daß hinter der Lichtscheibe 4 eine Fluoreszenzröhre vorgesehen ist. Um diesen Eindruck zu verstärken, kann in den Lichtleiter 9 von einem Ende Licht eingekoppelt werden. Hierzu ist an einem und/oder am anderen Ende des Lichtleiters 9 eine Lichtquelle, vorzugsweise eine LED, angeordnet, deren Strahlen durch den Lichtleiter 9 verlaufen. Die Vorder- und/oder Rückseite 16, 17 des Lichtleiters 9 kann mit optischen Elementen versehen sein, wie Linsen, Profile und dergleichen.

Die LEDs 8 und der Lichtleiter 9 sind bei der beschriebenen Leuchte 1 als Ersatz für herkömmliche teuere Fluoreszenzröhren geeignet. Dadurch kann die Leuchte 1 preisgünstig und einfach hergestellt werden. Die Leuchte hat infolge der Verwendung der LEDs eine lange Einsatzdauer. Schließlich eignet sich die Leuchte 1 für alle Arten von Signalleuchten, wie beispielsweise für vordere Blinkleuchten von PKWs.

## Patentansprüche

1. Leuchte, insbesondere Signalleuchte, wie Heckleuchte, für Kraftfahrzeuge, mit einem Leuchtengehäuse, dessen Gehäuseöffnung mit einer Lichtscheibe abgedeckt ist und in dem wenigstens ein Reflektor sowie mindestens eine Lichtquelle angeordnet sind,
**dadurch gekennzeichnet, daß** als Lichtquelle mindestens eine verdeckt im Gehäuse (2) angeordnete LED (8) vorgesehen ist, deren Strahlen (10) teilweise vom Reflektor (5) zu mindestens einem Lichtleiter (9) reflektiert werden, der im Bereich zwischen dem Reflektor (5) und der Lichtscheibe (4) liegt.

2. Leuchte nach Anspruch 1,
**dadurch gekennzeichnet, daß** die LED (8), vorzugsweise mehrere in Reihe hintereinander auf einer Platine (7) im Gehäuse (2) befestigte LEDs, in einem Aufnahmeraum (12) vorgesehen sind.

3. Leuchte an Anspruch 1 oder 2,
**dadurch gekennzeichnet, daß** die LED (8) eine SMD (surface mounted device)-LED ist.

4. Leuchte nach einem der Ansprüche 1 bis 3,
**dadurch gekennzeichnet, daß** der Lichtleiter (9) stabförmig ausgebildet ist.

5. Leuchte nach einem der Ansprüche 1 bis 4,
**dadurch gekennzeichnet, daß** sich der Lichtleiter (9) im wesentlichen über die ganze Länge der Leuchte (1) erstreckt.

6. Leuchte nach einem der Ansprüche 1 bis 5,
**dadurch gekennzeichnet, daß** der Lichtleiter (9) annähernd die Umrißform einer Fluoreszenzröhre hat.

7. Leuchte nach einem der Ansprüche 1 bis 6,
**dadurch gekennzeichnet, daß** der Abstand des Lichtleiters (9) zum Reflektor (5) kleiner ist als zur Lichtscheibe (4).

8. Leuchte nach einem der Ansprüche 1 bis 7,
**dadurch gekennzeichnet, daß** die dem Reflektor (5) zugewandte Rückseite (16) des Lichtleiters (9) im Querschnitt gerade ist.

9. Leuchte nach einem der Ansprüche 1 bis 7,
**dadurch gekennzeichnet, daß** die dem Reflektor (5) zugewandte Rückseite (16) des Lichtleiters (9) im Querschnitt gekrümmt ist.

10. Leuchte nach einem der Ansprüche 1 bis 9,
**dadurch gekennzeichnet, daß** die der Lichtscheibe (4) zugewandte Seite (17) des Lichtleiters (9) konvex gekrümmt ist.

11. Leuchte nach einem der Ansprüche 1 bis 10,
**dadurch gekennzeichnet, daß** in wenigstens ein Ende des Lichtleiters (9) Licht eingestrahlt wird.

12. Leuchte nach einem der Ansprüche 1 bis 11,
**dadurch gekennzeichnet, daß** an der Vorder- und/oder Rückseite (16, 17) des Lichtleiters (9) optische Elemente, wie Linsen, Profile und dergleichen, vorgesehen sind.
